Europäisches Patentamt

European Patent Office

Office européen des brevets

(19)

(11) Publication number : **0 283 323 B1**

(12)

# EUROPEAN PATENT SPECIFICATION

(45) Date of publication of patent specification :
**18.09.91 Bulletin 91/38**

(51) Int. Cl.$^5$ : **B60H 1/32**

(21) Application number : **88302454.9**

(22) Date of filing : **21.03.88**

(54) **Refrigeration circuit.**

(30) Priority : **20.03.87 JP 41584/87**

(43) Date of publication of application :
**21.09.88 Bulletin 88/38**

(45) Publication of the grant of the patent :
**18.09.91 Bulletin 91/38**

(84) Designated Contracting States :
**DE FR GB IT SE**

(56) References cited :
**US-A- 3 658 244**
**US-A- 4 548 047**
**US-A- 4 698 977**

(73) Proprietor : **SANDEN CORPORATION**
**20 Kotobuki-cho**
**Isesaki-shi Gunma, 372 (JP)**

(72) Inventor : **Takai, Kazuhiko**
**1-13-3, Omote-cho**
**Maebashi-shi Gunma 371 (JP)**

(74) Representative : **Jackson, Peter Arthur et al**
**Gill Jennings & Every, 53-64 Chancery Lane**
**London WC2A 1HN (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a refrigeration circuit in an automotive air conditioning system.

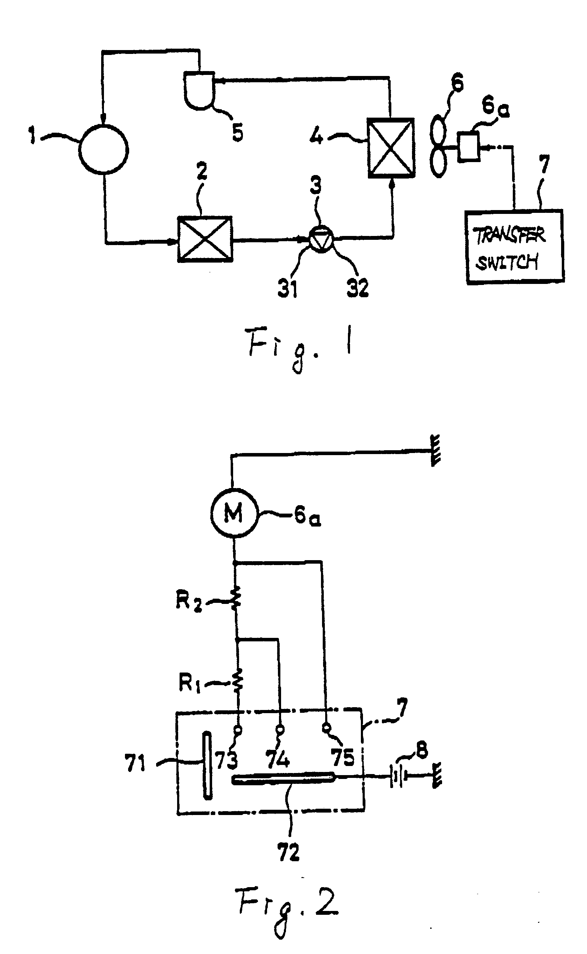

As shown in Figure 1 of the accompanying drawings, a conventional refrigeration circuit includes a compressor 1, a condensor 2, an expansion valve 3, an evaporator 4 and an accumulator 5, each of which is connected in the order shown in Fig. 1. The evaporator 4 is provided with a fan 6 which has a motor 6a to rotate the fan 6. The volume of airflow from the fan 6 is varied by switching of a transfer switch 7.

Referring to Fig. 2, this construction of a transfer switch 7 is shown. The transfer switch 7 includes a transfer contact point 71, a fixed contact point 72 which is connected to a electric source, and three fixed contact points, 73, 74 and 75 each of which is connected to the motor 6a of the fan 6. The fixed contact point 73 is coupled with the motor 6a through resistors R1 and R2 which are directly connected to each other. The fixed contact point 74 is coupled with the motor 6a through the resistor R2. The fixed contact point 75 is directly connected with the motor 6a. The transfer contact point 71 moves on the fixed contact points 72, 73 74 and 75 to switch the contact. To begin with, if the fixed contact point 73 is coupled with the fixed contact point 72 through the transfer contact point 71, since the value of the resistance between the motor 6a and the fixed contact point 73 becomes large, the electric current which flows to the motor 6a becomes small, thereby the rotational speed of the motor 6a also becomes low. Accordingly, the volume of airflow from the fan 6 becomes small. Secondly, if the fixed contact point 74 is coupled with the fixed contact point 72 through the transfer contact point 71, since the volume of the resistance between the motor 6a and the fixed contact point 73 becomes smaller, electric current becomes larger, thereby the rotational speed of the motor 6a increases. Accordingly, the volume of air flow from the fan 7 also becomes larger. Further, if the fixed contact point 75 is coupled with the fixed contact point 72 through the transfer contact point 71, since the value of the resistance between the motor 6a and the fixed contact 75 is zero, or nearly so, the electric current becomes even larger, thereby the rotational speed of the motor 6a reaches its highest speed. Accordingly, the volume of air flow from the fan 6 becomes the largest volume.

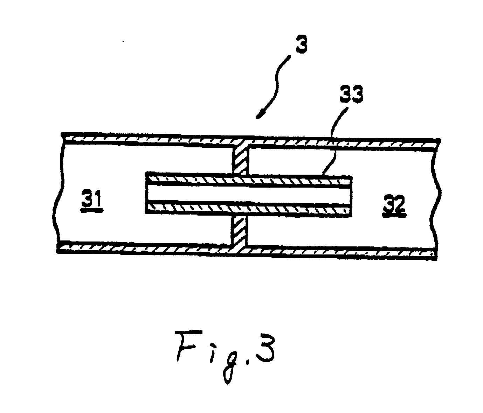

The expansion valve 3 has an orifice 33, of which the cross sectional area is a certain value as shown in Fig. 3.

In the above construction of expansion valve 3, since it is needed to provide the largest flow volume of refrigerant when the air conditioning load is the largest load, the cross sectional area of the orifice 33 cannot be reduced below a certain value. Accordingly, if the volume of airflow from the fan 6 is reduced to the smallest volume to reduce the capacity of the evaporator 4, excess refrigerant stays at the low pressure side 32 of the refrigerant circuit. Thus, a larger volume of the accumulator 5 is needed to prevent the excess refrigerant from collecting at the low pressure side 32 of the refrigerant circuit. However, if the volume of the accumulator 5 is enlarged, it is necessary to enlarge the space to house the enlarged accumulator 5, and there is the possibility that the circuit may not be conveniently housed within an engine room of an automobile.

Japanese Utility Model 59-21,938 discloses an expansion valve, of which the cross sectional area can be varied by using the negative pressure of an engine. However, the construction of such an expansion valve is complicated and it is costly to produce.

According to the invention, an automotive air conditioning system having a refrigeration circuit including a compressor, a condenser, an expansion valve means, an evaporator, and an accumulator so that, in use, refrigerant discharged from the compressor passes through the condenser, the expansion valve means, the evaporator and the accumulator, in turn, and returns to an inlet of the compressor ; and a fan for the evaporator for controlling the volume of an airflow in accordance with operation of a transfer switch ; is characterised in that the expansion valve means comprises an orifice and an actuator to control the cross sectional area of the orifice, the actuator being electrically controlled in response to operation of the transfer switch.

In the accompanying drawings :

Fig. 1 is a schematic view illustrating a conventional refrigerant circuit ;

Fig. 2 is a circuit diagram illustrating a switch of the circuit shown in Fig. 1 ;

Fig. 3 is a cross-sectional view illustrating an expansion valve of the circuit shown in Fig. 1 ;

Fig. 4 is a schematic view illustrating one refrigeration circuit in accordance with this invention ;

Figs. 5 and 6 are cross-sectional views illustrating an automatic expansion valve of the Fig. 4 circuit;

Figs. 7 is a circuit diagram illustrating a transfer switch for the automatic expansion valve shown in Figs. 5 and 6 ; and,

Fig. 8 is a circuit diagram illustrating another transfer switch for an automatic expansion valve as shown in Figs. 5 and 6.

The same numerals are accorded to the same elements as those shown in Figs. 1, 2 and 3, and the description of those elements is omitted to simplify the present specification.

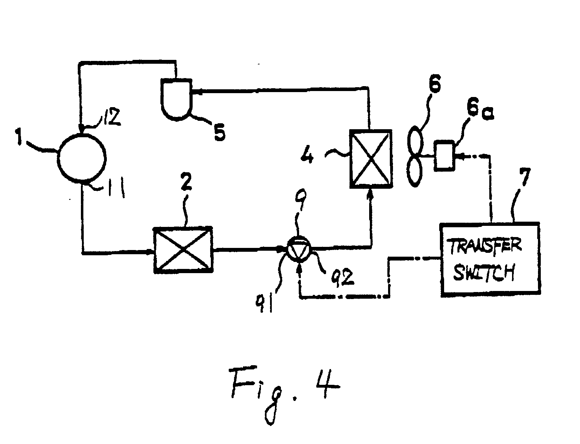

Referring to Fig. 4, the refrigeration circuit comprises a compressor 1, a condenser 2, an automatic expansion valve 9, an evaporator 4 located and connected to one another between an outlet port 11 and an inlet port 12 of the compressor. A transfer switch 7 is connected both to a motor 6a and to the automatic valve 9, to control operation of the motor 6a and of the automatic expansion valve 9 in response to operation of the transfer switch 10. The compressor 1 is driven by an engine and operates to circulate refrigerant around the circuit.

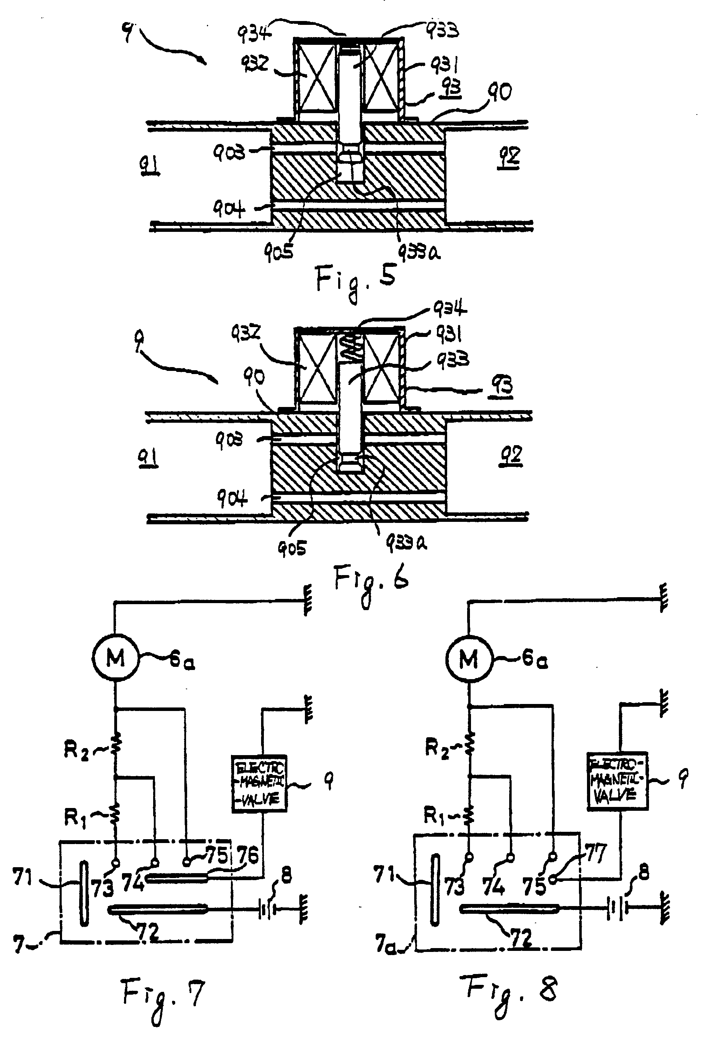

Figs. 5 and 6 show the construction of the automatic expansion valve 9. The valve 9 includes orifices 903 and 904 which are formed through a body portion 90. The orifices 903 and 904 interconnect a high pressure side 91 with a low pressure side 92 in the refrigerant circuit. The orifice 903 is connected to an aperture 905 which is formed on the outer surface of the body portion 90. The aperture 905 extends through the interior of the body portion 90 perpendicular to the cross orifice 903. An electromagetic valve 93 comprises a casing 931, an electromagnet 932, which is disposed in the casing 931, and a valve element 933 which is surrounded by the electromagnet 932. The valve element 933, which is movable within the aperture 905, is urged towards the bottom end of the aperture 905 by a coil spring 934, which is disposed between an inner end surface of casing 931 and the other end of the valve element 933. The diameter of the valve element 933 almost equals that of aperture 905 and has a small diameter portion 933a at a predetermined position.

If the electromagnetic 932 is not energized, as shown in Fig. 6, the valve element 933 is urged to the bottom end of the aperture 905 by the recoil strength of the coil spring 934 thereby obstructing communication between the high pressure side 91 and low pressure side 92. Contrarily, if the electromagnet 932 is energized, the electromagnet 932 attracts the valve element 933 against the recoil strength of the coil spring 934 as shown in Fig. 5. Accordingly, the small diameter portion 933a of the valve element 933 is aligned with the orifice 903, so that the orifice 903 interconnects the high pressure side 91 with the low pressure side 92.

As mentioned above, communication between the high pressure side 91 and the low pressure side 92 through the orifice 903 is controlled by the opening and closing operation of the valve element 933. Accordingly, if the electromagnet 932 is energized, both the orifices 903 and 904 interconnect the high pressure side 91 with the low pressure side 92, whereby the cross sectional area of the valve opening is largest. Contrarily, if the electromagnet 932 is not energized, only the orifice 904 interconnects the high pressure side 91 with the low pressure side 92, so that the cross sectional area of the valve opening is smallest.

Referring to Fig. 7, the transfer switch 7 includes a transfer contact point 71, a fixed contact point 72 which is connected to an electric source 8, fixed contact points 73, 74 and 75 which are connected to the motor 6a, respectively, and a fixed contact point 76 which is connected to the electromagnet valve 9. The fixed contact points 73, 74 and 75 are connected to the motor 6a as shown in Fig. 2. The fixed contact point 76 is located in correspondence with the fixed contact points 74 and 75. Accordingly, if the transfer contact point 71 moves, and the fixed contact point 72 is connected to the fixed points 74 or 75 through the transfer contact point 71, since the fixed contact point 72 is also connected to the fixed point 76, the electromagnetic valve 9 is energized. If the fixed contact point 72 is connected to the fixed contact point 73 through the transfer contact point 71, since the fixed contact point 72 is not connected to the fixed contact point 76, the electromagnetic valve 9 is not energized. As mentioned above, the transfer switch 7 controls switching of the electromagnetic valve 9 as well as the volume of airflow from the fan.

The operation of the transfer switch 7 to attain the desired air condition is described below. If the fixed contact point 75 is connected to the fixed contact point 72 through the transfer contact point 71, the motor 6a rotates at its highest rotational speed since no resistor is disposed between the motor 6a and the fixed contact point 75. Simultaneously, since the fixed contact point 76 is also connected to the fixed contact point 72, the electromagnetic valve 9 is energized, whereby orifice 903 interconnects the high pressure side 91 with the low pressure side 92 as shown in Fig. 5. Accordingly, the cross sectional areas of the orifices 903 and 904 are largest and the capacity of the evaporator 4 becomes the largest capacity. Therefore, the capacity of the evaporator 4 balances the volume of airflow from the fan 6 so that the air conditioning system provides the largest air conditioning capacity.

Secondly, when the fixed contact point 74 is connected to the motor 6a, it rotates at the middle rotational speed since one resistor is disposed between the motor 6a and the fixed contact point 74.

Similtaneously, since fixed contact point 76 is also connected to the fixed contact point 72, the electromagnetic valve 9 is energized, so that the orifice 903 interconnects the high pressure side 91 with the low pressure side 92. Accordingly, as mentioned above, the capacity of the evaporator 4 balances the volume of airflow from fan 6.

Furthermore, if the fixed contact point 73 is connected to the fixed contact point 72 through the transfer contact point 71, the motor 6a rotates at its lowest rotational speed since two resistors are disposed between the motor 6a and the fixed contact point 73. At this time, the fixed contact point 76 is not connected to the fixed contact point 72 through the transfer contact point 71. Accordingly, the electromagnetic valve 9 is not energized, and the connection between the high pressure side 91 and the low pressure side through the orifice 903 is prevented by the valve element 933 as shown in Fig. 6, thereby refrigerant only flows from the high pressure side 91 to the low pressure side 92 through the orifice 904. Therefore, the cross sectional area of the orifices 903 and 904 is smallest, and the capacity of the evaporator 4 balances the volume of refrigerant flowing thereto. Thus, excess refrigerant is prevented from accumulating at the low pressure side 92, and an accumulator with a small volume may be used in the refrigeration circuit.

In the above example, the transfer switch 7 is set so that when the volume of airflow from the fan 6 is at the largest or middle value, the cross sectional area of the orifices 903 and 904 are largest, and when the volume of airflow from the fan 6 is smallest, the cross sectional area of the orifices 903 and 904 becomes smallest. Similarly, the transfer switch 7 can be set so that when the volume of airflow from the fan 6 is the largest, the cross sectional area of the orifices 903 and 904 becomes largest, and when the volume of airflow from the fan 6 is at the middle or smallest values, the cross sectional area of the orifices 903 and 904 becomes smallest.

With reference to Fig. 8, a circuit diagram of a transfer switch for controlling an automotive expansion valve in accordance with another example is shown. In this example, a fixed contact point 77, which is connected to the electromagnetic valve 9, is located in corespondence with only the fixed contact point 75. Accordingly, only when the fixed contact point 72 is connected to the fixed contact point 75 through the transfer contact point 71, is the fixed contact point 77 connected to the fixed contact point 72, so that the electromagnetic valve 9 is energized. Accordingly, the cross sectional area of the orifices 903 and 904 becomes largest. If the contact point 72 is connected to the fixed contact point 73 or 74 through the transfer contact point 71, since the fixed contact point 77 is not connected to the fixed contact point 72, the electromagnetic valve 9 is not energized, so that the cross sectional area of the orifices 903 and 904 becomes smallest.

## Claims

1. An automotive air conditioning system having a refrigeration circuit including a compressor (1), a condenser (2), an expansion valve means (9), an evaporator (4), and an accumulator (5) so that, in use, refrigerant discharged from the compressor passes through the condenser, the expansion valve means, the evaporator and the accumulator, in turn, and returns to an inlet of the compressor ; and a fan (6) for the evaporator for controlling the volume of an airflow in accordance with operation of a transfer switch (7) ; characterised in that the expansion valve means (9) comprises an orifice (903) and an actuator (93) to control the cross sectional area of the orifice, the actuator being electrically controlled in response to operation of the transfer switch (7).

2. A system according to claim 1, wherein the actuator operates to enlarge the cross sectional area of the orifice in response to a larger volume of the airflow from the fan and to reduce the cross sectional area of the orifice in response to a smaller volume of the airflow from the fan.

3. A system according to claim 1 or claim 2, wherein the actuator is an electromagnetic valve (93).

## Patentansprüche

1. Selbstfahrendes Klimaanlagensystem mit einem einen Kompressor (1), einen Kondensator (2), ein Expansionsventilmittel (9), einen Verdampfer (4) und einen Akkumulator (5) so aufweisenden Kühlkreislauf, daß bei Benutzung von dem Kompressor ausgegebenes Kühlmittel durch den Kondensator, das Expensionsventilmittel, den Verdampfer und den Akkumulator in der Reihenfolge geht und zu einem Einlaß des Kompressors zurückkehrt ; und mit einem Ventilator (6) für den Verdampfer zum Steuern des Volumens eines Luftstromes gemäß der Tätigkeit eines Übertragungsschalters (7) ; dadurch gekennzeichnet, daß das Expansionsventilmittel (9) eine Öffnung (903) und ein Betätigungselement (93) zum Steuern der Querschnittsfläche der Öffnung aufweist, wobei das Betätigungselement elektrisch als Reaktion auf die Tätigkeit des Übertragungsssschalters (7) gesteuert ist.

2. System nach Anspruch 1, bei dem das Betätigungselement zum Vergrößern der Querschnittsfläche der Öffnung als Reaktion auf ein größeres Volumen des Luftstromes von dem Ventilator und zum Verringern der Querschnittsfläche der Öffnung als Reaktion auf ein kleineres Volumen des Luftstromes von dem Ventilator tätig ist.

3. System nach Anspruch 1 oder 2, bei dem das Betätigungselement ein elektromagnetisches Ventil (93) ist.

## Revendications

1. Système de conditionnement d'air d'automobile muni d'un circuit de refroidissement comprenant un compresseur (1), un condenseur (2), un dispositif de soupape d'expansion (9), un évaporateur (4), et un accumulateur (5), de façon qu'en cours d'utilisation le réfrigérant déchargé du compresseur passe successivement par le condenseur, le dispositif de soupape d'expansion, l'évaporateur et l'accumulateur, pour retourner à un orifice d'entrée du compresseur et un ventilateur (6) associé à l'évaporateur pour commander le volume d'un écoulement d'air conformément au fonctionnement d'un commutateur de transfert (7), système caractérisé en ce que le dispositif de soupape d'expansion (9) comprend un orifice (903) et un organe de manoeuvre (93) pour commander la surface de section transversale de l'orifice, l'organe de manoeuvre étant commandé électriquement en réponse au fonctionnement du commutateur de transfert (7).

2. Système selon la revendication 1, caractérisé en ce que l'organe de manoeuvre fonctionne pour augmenter la surface de section transversale de l'orifice en réponse à un plus grand volume de l'écoulement d'air provenant du ventilateur, et pour diminuer la surface de section transversale de l'orifice en réponse à un plus petit volume de l'écoulement d'air provenant du ventilateur.

3. Système selon l'une quelconque des revendications 1 et 2, caractérisé en ce que l'organe de manoeuvre est une soupape électromagnétique (93).

Fig. 1

Frg. 2

Fig.3

Fig. 4

Fig. 5

Fig. 6

Fig. 7

Fig. 8